# EUROPEAN PATENT APPLICATION

(11) **EP 4 478 328 A1**
(43) Date of publication of application: **18.12.2024**
(21) Application number: 23752699.1
(22) Date of filing: 27.01.2023
(51) Int. Cl.: G08G 1/09, G01C 21/36

(54) **INFORMATION PROCESSING DEVICE, INFORMATION PROCESSING METHOD, AND INFORMATION PROCESSING PROGRAM**

(30) Priority: 08.02.2022 JP 2022018281
(71) Applicant: Pioneer Corporation, Tokyo 113-0021 (JP)
(72) Inventor: NAKAGAWA, Takeshi, Kawagoe-shi, Saitama 350-8555 (JP)
(74) Representative: Hoffmann Eitle
(86) International application number: PCT/JP2023/002554
(87) International publication number: WO 2023/153234

(57) **Abstract**

An information processing device (100, 200) includes an obtaining unit (232) that obtains route information indicating a travel route of a vehicle up to the destination, map information corresponding to the travel route, and actual location information indicating the actual location of the vehicle; an estimating unit that, based on the route information, the map information, and the actual location information, estimates a recommended time slot for dialogue, in which it is recommended to have a dialogue with the driver of the vehicle, during the running period for which the vehicle runs on the travel route; and a providing unit (134) that provides an external device with scheduling information indicating the recommended time slot for dialogue.

## Description

### Field

The application disclosed herein is related to an information processing device, an information processing method, and an information processing program.

### Background

Conventionally, an information processing device has been proposed that is equipped with a navigation function by which a route search is performed from the point of departure up to the destination as set by the driver and a guided route is shown according to the search result. Such an information processing device outputs voice navigation about the route guidance (such as guiding about right turns and left turns), traffic information (congestion/traffic restrictions/accident-prone locations in the surrounding area), and recommendations information (recommendations about surrounding facilities).

Among such information processing devices, there are known information processing devices in which advertisement information is output at predetermined timings and an advertisement rate is applied so as to make the navigation function available at no charge. For example, an information processing device is known that includes an output control unit which, at a predetermined timing that does not clash with the output timing of voice navigation to be output during the travel to the destination, causes an output unit to output a voice advertisement.

### Citation List

### Patent Literature

[Patent Literature 1] Japanese Patent Application Laid-open No. 2017-58301

### Summary

### Technical Problem

Thus, in the conventional technology explained above, a voice advertisement is output at a predetermined timing that does not clash with the output timing of voice navigation to be output during the travel to the destination. That is, a voice advertisement is output at a timing when no voice navigation is output. However, a timing when no voice navigation is output is not always a suitable timing for outputting a voice advertisement, and can also be a suitable timing for the driver to talk while driving. In other words, it is also possible to think that such a timing is suitable for a dialogue seeker, who seeks to have a dialogue with the driver who is driving, to talk with the driver who is driving. However, in the conventional technology explained above, no consideration is given whatsoever to ensuring that the dialogue seeker, who seeks to have a dialogue with the driver who is driving, becomes able to talk with the driver at a suitable timing for the driver to talk while driving.

The application concerned provides an information processing device, an information processing method, and an information processing program that enable ensuring that the dialogue seeker, who seeks to have a dialogue with the driver who is driving, becomes able to talk with the driver at a suitable timing for the driver to talk while driving. Solution to Problem

An information processing device includes an obtaining unit that obtains route information indicating travel route of a vehicle up to destination, map information corresponding to the travel route, and actual location information indicating actual location of the vehicle; an estimating unit that, based on the route information, the map information, and the actual location information, estimates a recommended time slot for dialogue, in which it is recommended to have a dialogue with driver of the vehicle, during a running period for which the vehicle runs on the travel route; and a providing unit that provides an external device with scheduling information indicating the recommended time slot for dialogue.

An information processing method implemented in an information processing device, the method includes an obtaining step that includes obtaining route information indicating travel route of a vehicle up to destination, map information corresponding to the travel route, and actual location information indicating actual location of the vehicle; an estimating step that, based on the route information, the map information, and the actual location information, includes estimating a recommended time slot for dialogue, in which it is recommended to have a dialogue with driver of the vehicle, during a running period for which the vehicle runs on the travel route; and a providing step that includes providing an external device with scheduling information indicating the recommended time slot for dialogue.

An information processing program for causing an information processing device, executes an obtaining step that includes obtaining route information indicating travel route of a vehicle up to destination, map information corresponding to the travel route, and actual location information indicating actual location of the vehicle; an estimating step that, based on the route information, the map information, and the actual location information, includes estimating a recommended time slot for dialogue, in which it is recommended to have a dialogue with driver of the vehicle, during a running period for which the vehicle runs on the travel route; and a providing step that includes providing an external device with scheduling information indicating the recommended time slot for dialogue.

### Brief Description of Drawings

FIG. 1 is a diagram illustrating an exemplary configuration of an information processing system according to an embodiment.
FIG. 2 is a diagram illustrating an exemplary configuration of a scheduling server according to the embodiment.
FIG. 3 is a diagram illustrating an exemplary configuration of an in-vehicle terminal device according to the embodiment.
FIG. 4 is a diagram illustrating an exemplary configuration of a terminal device according to the embodiment.
FIG. 5 is a diagram illustrating an example of integrated schedule information according to the embodiment.
FIG. 6 is a diagram for explaining a reception operation for receiving a dialogue appointment according to the embodiment.
FIG. 7 is a diagram illustrating an example of integrated schedule information in which a dialogue appointment is reflected according to the embodiment.
FIG. 8 is a flowchart for explaining the flow of information processing performed in the scheduling server according to the embodiment.
FIG. 9 is a hardware configuration diagram illustrating an exemplary computer for implementing the functions of the information processing device. Description of Embodiments

An illustrative embodiment (hereinafter, called "embodiment") of the present invention is described below with reference to the accompanying drawings. However, the present invention is not limited by the embodiment described below. Moreover, in the drawings, the same constituent elements are referred to by the same reference numerals.

### (Embodiment)

### [1. Configuration of information processing system]

Generally, in the case of talking to the driver who is driving, it is required to avoid calling the driver when there is high driving burden on the driver. For example, it is required to avoid calling the driver when the vehicle is running in a section that requires attention to driving, such as a section involving a lot of bends. That is because, if the driver is called when there is high driving burden, the attention to driving undergoes a decline, thereby possibly triggering an accident while driving. Moreover, at such a timing, even if it becomes possible to talk to the driver, the voice navigation output for prompting attention to driving causes interruption, and the dialogue is likely to be frequently discontinued.

In contrast, an information processing system 1 estimates, from the running period for which the vehicle runs on the set travel route, a recommended time slot for dialogue during which it is recommended to have a dialogue with the driver of the vehicle. Thus, the recommended time slot for dialogue represents the time slot during which it is relatively easier for the driver to talk (i.e., represents a dialogue enabling time slot). The information processing system 1 provides a system in which schedule information indicating a recommended time slot for dialogue is provided to the dialogue seeker, so that the dialogue seeker becomes able to take a dialogue appointment during the recommended time slot for dialogue with the aim of having a dialogue with the driver. Generally, a time slot in which voice navigation need not be output is believed to be the time slot in which, for example, even when the driver who is driving talks with someone, the dialogue is not discontinued due to voice navigation. Hence, such a time slot is suitable for the driver to talk while driving. In that regard, the information processing system 1 estimates, as a recommended time slot for dialogue, a time slot in which voice navigation, which is output according to the actual location of the vehicle, need not be output. As a result, the information processing system 1 enables the dialogue seeker to talk with the driver, who is driving, in a suitable time slot for the driver to talk while driving.

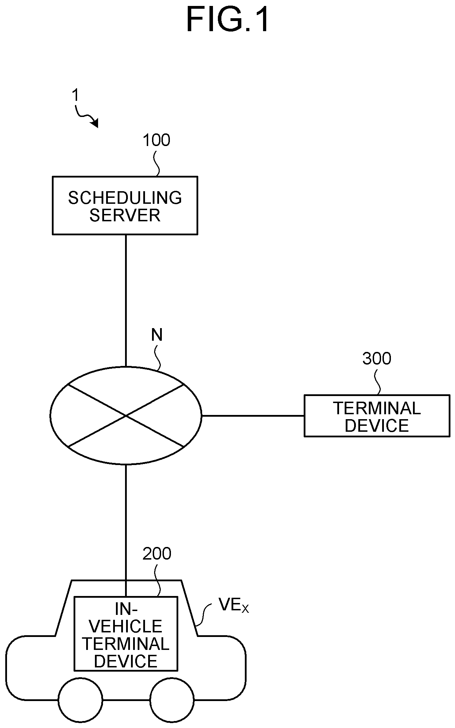

Firstly, explained below with reference to FIG. 1 is a configuration of the information processing system 1 according to the embodiment. FIG. 1 is a diagram illustrating an exemplary configuration of the information processing system 1 according to the embodiment. As illustrated in FIG. 1, the information processing system 1 includes a scheduling server 100, an in-vehicle terminal device 200, and a terminal device 300. The scheduling server 100, the in-vehicle terminal device 200, and the terminal device 300 are communicably connected to each other in a wired manner or a wireless manner via a predetermined network N. Meanwhile, the information processing system 1 illustrated in FIG. 1 can include a plurality of scheduling servers 100, a plurality of in-vehicle terminal devices 200, and a plurality of terminal devices 300.

The scheduling server 100 is an information processing device that provides schedule information of the driver to a third person (for example, a dialogue seeker), who is a person other than the driver. More particularly, the scheduling server 100 obtains, from the in-vehicle terminal device 200, a recommended time slot for dialogue during which it is recommended to have a dialogue with the driver of the vehicle (hereinafter, simply referred to as a recommended time slot for dialogue). Then, the scheduling server 100 generates schedule information in which the recommended time slot for dialogue is specified. Moreover, when a transmission request for sending the schedule information is received from the terminal device 300 of a third person, the scheduling server 100 sends the generated schedule information to that terminal device 300. Furthermore, when a dialogue appointment with the driver is received from the terminal device 300, the scheduling server 100 sends, to the in-vehicle terminal device 200, information for requesting approval for the dialogue appointment and the schedule information. When information indicating approval for the dialogue appointment is received from the in-vehicle terminal device 200, the scheduling server 100 generates schedule information in which the dialogue appointment is reflected. Then, the scheduling server 100 sends the schedule information, in which the dialogue appointment is reflected, to the terminal device 300 and the in-vehicle terminal device 200.

The in-vehicle terminal device 200 is an information processing device installed in a vehicle. More particularly, the in-vehicle terminal device 200 is an information processing device equipped with the navigation function. For example, the in-vehicle terminal device 200 is a stationary navigation device installed in a vehicle. Meanwhile, the in-vehicle terminal device 200 is not limited to be a navigation device, and can alternatively be a handheld terminal device such as a smartphone used by the driver of the vehicle. For example, the in-vehicle terminal device 200 can be a terminal device that belongs to the driver and that is installed with an application for implementing the navigation function. Moreover, the in-vehicle terminal device 200 outputs voice navigation according to the actual location of the vehicle. For example, according to the actual location of the vehicle, the in-vehicle terminal device 200 outputs voice navigation about the route guidance (such as guiding about right turns and left turns), traffic information (congestion/traffic restrictions/accident-prone locations in the surrounding area), and recommendations information (recommendations about surrounding facilities). Furthermore, the in-vehicle terminal device 200 estimates a time slot in which voice navigation, which is output according to the actual location of the vehicle, need not be output; and sends, to the scheduling server 100, the estimated time slot in which voice navigation need not be output as a recommended time slot for dialogue.

The terminal device 300 is an information processing device used by a third person other than the driver. The terminal device 300 is implemented using, for example, a smartphone, a tablet terminal, a notebook PC (Personal Computer), a cellular phone, or a PDA (Personal Digital Assistant). Meanwhile, the terminal device 300 can alternatively be an information processing device installed in a vehicle. The following explanation is given about a case in which the third person represents a user who seeks to have a dialogue with the driver (in the following explanation, called a dialogue seeker). The terminal device 300 obtains the schedule information of the driver from the scheduling server 100 and displays the schedule information on a screen. Moreover, according to an operation performed by the dialogue-seeker, the in-vehicle terminal device 200 receives an input operation that is related to a dialogue appointment with the driver during the recommended time slot for dialogue specified in the schedule information displayed on the screen. When an input operation related to a dialogue appointment with the driver is received, the terminal device 300 sends, to the scheduling server 100, information for requesting a dialogue appointment with the driver.

### [2. Configuration of scheduling server]

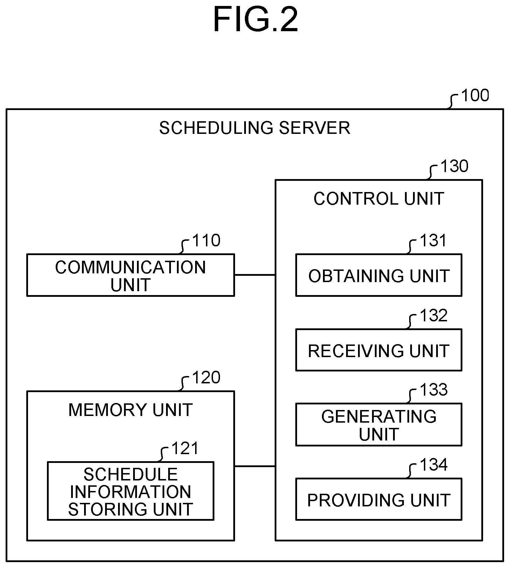

Explained below with reference to FIG. 2 is a configuration of the scheduling server 100 according to the embodiment. FIG. 2 is a diagram illustrating an exemplary configuration of the scheduling server 100 according to the embodiment. As illustrated in FIG. 2, the scheduling server 100 includes a communication unit 110, a memory unit 120, and a control unit 130.

The communication unit 110 is implemented using, for example, an NIC (Network Interface Card). The communication unit 110 is a communication interface connected to the in-vehicle terminal device 200 and the terminal device 300 in a wired manner or a wireless manner via the network N, and controls the communication of information with the in-vehicle terminal device 200 and the terminal device 300.

The memory unit 120 is implemented, for example, using a semiconductor memory device such as a RAM (Random Access Memory) or a flash memory; or using a memory device such as a hard disk or an optical disc. More particularly, the memory unit 120 is used to store the information (such as an information processing program and data) that is for use in the operations performed by the control unit 130.

Moreover, as illustrated in FIG. 2, the memory unit 120 includes a schedule information storing unit 121. In the schedule information storing unit 121, a variety of information related to the schedule of the driver is stored for each in-vehicle terminal device 200.

The control unit 130 is a controller implemented when, for example, various programs (equivalent to an example of the information processing program) stored in the internal memory device of the scheduling server 100 are implemented by a CPU (Central Processing Unit), an MPU (Micro Processing Unit), an ASIC (Application Specific Integrated Circuit), or an FPGA (Field Programmable Gate Array) using a memory area, such as the R_AM, as the work area. In the example illustrated in FIG. 2, the control unit 130 includes an obtaining unit 131, a receiving unit 132, a generating unit 133, and a providing unit 134.

The obtaining unit 131 obtains, from the in-vehicle terminal device 200 via the communication unit 110, the information indicating the running period for which the vehicle runs on the travel route, the information indicating a recommended time slot for dialogue during the running period, and the other schedule information of the driver. Upon obtaining the information indicating the running period, the information indicating a recommended time slot for dialogue, and the other schedule information of the driver; the obtaining unit 131 stores the information indicating the running period, the information indicating a recommended time slot for dialogue, and the other schedule information of the driver in the schedule information storing unit 121 in a corresponding manner to driver identification information that enables identification of the driver.

Moreover, the obtaining unit 131 obtains the schedule information of the dialogue seeker from the terminal device 300 via the communication unit 110. Upon obtaining the schedule information of the dialogue seeker, the obtaining unit 131 stores the schedule information of the dialogue seeker in the schedule information storing unit 121 in a corresponding manner to third person identification information that enables identification of the dialogue seeker.

The receiving unit 132 receives, from the terminal device 300, a transmission request for sending the schedule information of the driver. More particularly, the receiving unit 132 receives a transmission request for sending the driver identification information along with the schedule information of the driver who is identified by that driver identification information.

When the receiving unit 132 receives a transmission request for sending the schedule information of the driver, the generating unit 133 refers to the schedule information storing unit 121 and obtains the schedule information of the driver who is identified by the driver identification information received by the receiving unit 132 along with receiving the transmission request. More particularly, the generating unit 133 obtains the information indicating the running period, the information indicating a recommended time slot for dialogue, and the other schedule information of the driver as the schedule information of the driver. Then, based on the schedule information of the driver, the generating unit 133 generates first-type integrated schedule information by integrating the running period for which the vehicle runs on the travel route, the recommended time slot for dialogue during the running period, and the other schedule of the driver.

When the receiving unit 132 receives a transmission request for sending the schedule information of the driver, the generating unit 133 refers to the schedule information storing unit 121 and obtains the schedule information of the dialogue seeker who is using the terminal device 300 from which the transmission request was received by the receiving unit 132. Then, based on the schedule information of the dialogue seeker, the generating unit 133 generates second-type integrated schedule information in which the first-type integrated schedule information and the schedule information of the dialogue seeker is displayed side-by-side.

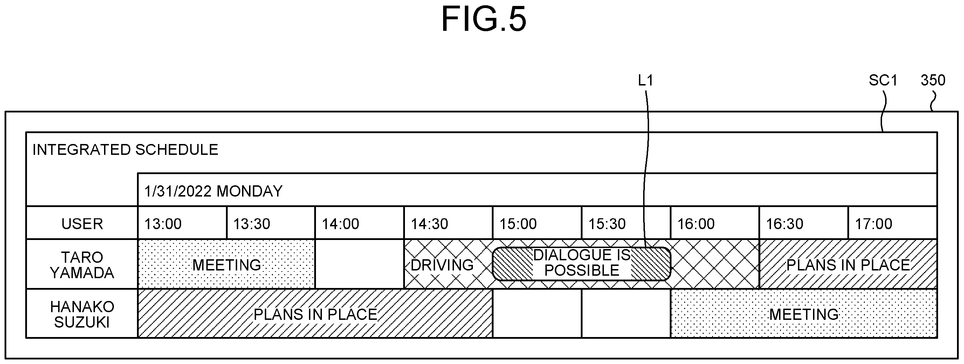

FIG. 5 is a diagram illustrating an example of integrated schedule information according to the embodiment. In the example illustrated in FIG. 5, the generating unit 133 generates second-type integrated schedule information SC1 in which first-type integrated schedule information or Taro Yamada, who is the driver, and the schedule information of Hanako Suzuki, who is the dialogue seeker, is displayed in a tiled manner. In the first-type integrated schedule information of Taro Yamada as illustrated in FIG. 5, the time slot "14:30 to 16:30" corresponding to a slot of "driving" indicates the running period for which the vehicle runs on the travel route. Moreover, the time slot "15:00 to 16:00" corresponding to a slot L1 of "dialogue is possible" indicates the recommended time slot for dialogue during the running period.

The providing unit 134 provides the schedule information, which indicates the recommended time slot for dialogue and which is generated by the generating unit 133, to an external device other than the scheduling server 100. More particularly, the providing unit 134 sends the second-type integrated schedule information, which is generated by the generating unit 133, to the terminal device 300.

The receiving unit 132 receives, from the terminal device 300 via the communication unit 110, request information related to a dialogue appointment with the driver. When the receiving unit 132 receives request information related to a dialogue appointment with the driver; the providing unit 134 sends, to the in-vehicle terminal device 200, the information for requesting approval for a dialogue appointment and the schedule information indicating a recommended time slot for dialogue. More particularly, the providing unit 134 sends, to the in-vehicle terminal device 200, the information for requesting approval for a dialogue appointment and the second-type integrated schedule information.

Moreover, the receiving unit 132 receives, from the in-vehicle terminal device 200 via the communication unit 110, information indicating driver approval for a dialogue appointment. When the receiving unit 132 receives information indicating driver approval for a dialogue appointment, the generating unit 133 generates second-type integrated schedule information in which the dialogue appointment is reflected. Then, the providing unit 134 sends, to the terminal device 300 and the in-vehicle terminal device 200, the second-type integrated schedule information in which the dialogue appointment is reflected and which is generated by the generating unit 133.

### [3. Configuration of in-vehicle terminal device]

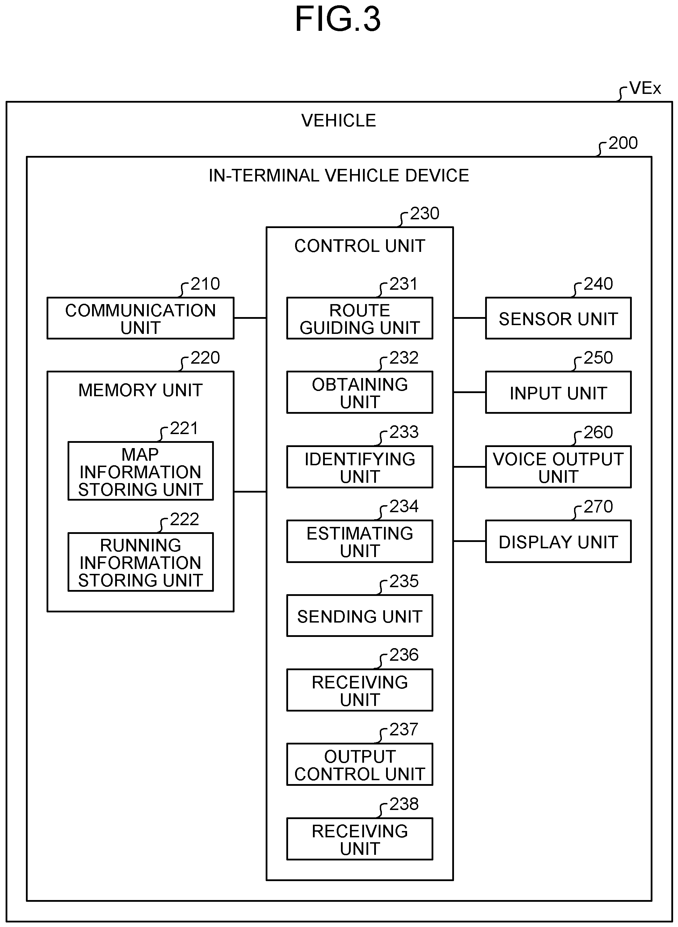

Explained below with reference to FIG. 3 is a configuration of the in-vehicle terminal device 200 according to the embodiment. FIG. 3 is a diagram illustrating an exemplary configuration of the in-vehicle terminal device 200 according to the embodiment. As illustrated in FIG. 3, the in-vehicle terminal device 200 includes a communication unit 210, a memory unit 220, a control unit 230, a sensor unit 240, an input unit 250, a voice output unit 260, and a display unit 270.

The communication unit 210 is implemented using, for example, an NIC. The communication unit 210 is a communication interface connected to the scheduling server 100 and the terminal device 300 in a wired manner or a wireless manner via the network N, and controls the communication of information with the scheduling server 100 and the terminal device 300.

The memory unit 220 is implemented, for example, using a semiconductor memory device such as a RAM or a flash memory, or using a memory device such as a hard disk or an optical disc. For example, the memory unit 220 is used to store the information (such as an information processing program and data) that is for use in the operations performed by the control unit 230.

As illustrated in FIG. 3, the memory unit 220 includes a map information storing unit 221 and a running information storing unit 222. The map information storing unit 221 is used to store a variety of information related to maps. The running information storing unit 222 is used to store a variety of information related to the running of the vehicle. More particularly, the running information storing unit 222 is used to store route information indicating the travel route of the vehicle up to the destination. For example, when a route is set in the navigation function of the in-vehicle terminal device 200, the running information storing unit 222 is used to store route information of the travel route that is selected by the driver from among the travel routes proposed to the driver by a route guiding unit 231. Moreover, the running information storing unit 222 is used to store running history information indicating the running history of the vehicle.

The control unit 230 is a controller implemented when, for example, various programs (equivalent to an example of the information processing program) stored in the internal memory device of the in-vehicle terminal device 200 are implemented by a CPU, an MPU, an ASIC, or an FPGA using a memory area, such as the RAM, as the work area. In the example illustrated in FIG. 3, the control unit 230 includes the route guiding unit 231, an obtaining unit 232, an identifying unit 233, an estimating unit 234, a sending unit 235, a receiving unit 236, an output control unit 237, and a receiving unit 238.

The route guiding unit 231 implements the navigation function of the in-vehicle terminal device 200. More particularly, when route settings are received from the driver, the route guiding unit 231 performs a route search for the route up to the destination set by the driver. For example, the route guiding unit 231 performs a route search from the point of departure set by the driver up to the destination set by the driver. For example, the route guiding unit 231 obtains information related to the point of departure and the destination corresponding to an input operation received by the input unit 250. Once the information related to the point of departure and the destination is obtained, the route guiding unit 231 refers to the map information storing unit 221 and obtains map information. Subsequently, using the map information, the route guiding unit 231 searches for a route from the point of departure up to the destination. Meanwhile, when the setting of only the destination is received from the driver, the route guiding unit 231 can search for the travel route of the vehicle by treating, as the point of departure, the actual location of the vehicle at the point of time of starting the search. Moreover, when a route search is performed, the route guiding unit 231 can store the point of departure, the destination, and the information related to the travel route corresponding to the search result in a corresponding manner in the running information storing unit 222.

Moreover, when a travel route is searched, the route guiding unit 231 proposes the search result to the driver. Furthermore, when the proposed travel route is selected by the driver, the route guiding unit 231 controls the voice output unit 260 to output voice navigation related to route guidance according to the travel route selected by the driver.

The obtaining unit 232 obtains route information indicating the travel route of the vehicle up to the destination. More particularly, the obtaining unit 232 refers to the running information storing unit 222 and obtains route information indicating the travel route that is selected by the driver and that is set as the present travel route from among the travel routes retrieved by the route guiding unit 231.

Moreover, the obtaining unit 232 obtains the map information corresponding to the travel route. More particularly, the obtaining unit 232 refers to the map information storing unit 221 and obtains the map information corresponding to the travel route selected by the driver from among the travel routes retrieved by the route guiding unit 231. For example, the obtaining unit 232 obtains the map information in which the travel route selected by the driver is included.

Furthermore, the obtaining unit 232 obtains actual location information indicating the actual location of the vehicle. More particularly, the obtaining unit 232 obtains positioning data, which is generated by the GNSS sensor of the sensor unit 240, from the GNSS sensor of the sensor unit 240. Then, from the positioning data, the obtaining unit 232 obtains, as the actual location of the vehicle, latitude information and longitude information indicating the actual location of the vehicle.

Based on the route information, the map information, and the actual location information, the identifying unit 233 identifies a section in the travel route in which voice navigation need not be output. More particularly, the identifying unit 233 identifies, as a section in the travel route in which voice navigation need not be output, the section between the output points of successive voice navigation in the travel route. For example, based on the route information and the map information, the identifying unit 233 identifies the output points of voice navigation in the travel route. For example, based on the route information and the map information, the identifying unit 233 identifies the output points of voice navigation related to the route guidance such as guiding about right turns and left turns. Moreover, based on the route information and the map information, the identifying unit 233 identifies the output points of voice navigation related to the traffic information such as traffic restrictions/accident-prone locations. Furthermore, based on the route information and the map information, the identifying unit 233 identifies the output points of voice navigation related to the recommendations information such as recommendations about surrounding facilities. Then, based on the actual location information, the identifying unit 233 identifies the output points of voice navigation in the travel route to be followed next by the vehicle.

When the output points of voice navigation are identified in the travel route to be followed next by the vehicle, the identifying unit 233 identifies the section between the output points of successive voice navigation in the travel route to be followed next by the vehicle. For example, in the travel route to be followed next by the vehicle, when the output point of initial voice navigation (i.e., a first output point) and the output point of next voice navigation (i.e., a second output point) are identified, the identifying unit 233 identifies the section between the first output point and the second output point as the section between the output points of successive voice navigation. Moreover, in the travel route to be followed next by the vehicle, when the output point of the second voice navigation (i.e., the second output point) and the output point of third voice navigation (i.e., the third output point) are identified, the identifying unit 233 identifies the section between the second output point and the third output point as the section between the output points of successive voice navigation.

Based on the route information, the map information, and the actual location information; the estimating unit 234 estimates a recommended time slot for dialogue, in which it is recommended to have a dialogue with the driver of the vehicle, during the running period for which the vehicle runs on the set travel route. More particularly, based on the route information, the map information, and the actual location information; the estimating unit 234 estimates such a time slot during the running period, for which the vehicle runs on the set travel route, in which voice navigation need not be output. More particularly, the estimating unit 234 estimates the expected time of arrival of the vehicle to the section that is identified by the identifying unit 233 as the section in which voice navigation need not be output. Then, the estimating unit 234 estimates the expected time of passage of the vehicle through the section that is identified by the identifying unit 233 as the section in which voice navigation need not be output. Subsequently, the estimating unit 234 estimates that the time slot from the expected time of arrival to the expected time of passage represents the time slot in which voice navigation need not be output.

The estimating unit 234 estimates the expected time of arrival of the vehicle to the section between the output points of successive voice navigation as identified by the identifying unit 233. For example, the estimating unit 234 estimates the expected time of arrival of the vehicle to the starting point of the section between the output points of successive voice navigation as identified by the identifying unit 233. For example, based on the route information, the map information, and the actual location information; the estimating unit 234 estimates the running distance from the actual location of the vehicle to the starting point of the section that is identified by the identifying unit 233. Then, the estimating unit 234 divides the estimated running distance by the running velocity (for example, the average velocity) of the vehicle, and estimates the travel time from the actual location to the starting point of the concerned section (hereinafter, also called a first-type travel time). Moreover, when the first-type travel time is estimated, the estimating unit 234 adds the first-type travel time to the current time, and estimates the expected time of arrival to the starting point of the concerned section.

Then, the estimating unit 234 estimates the expected time of passage of the vehicle through the section that is identified by the identifying unit 233 as the section in which voice navigation need not be output. More particularly, the estimating unit 234 estimates the expected time of passage of the vehicle through the section that is identified by the identifying unit 233 as the section between the output points of successive voice navigation in the travel route. For example, the estimating unit 234 estimates the expected time of passage of the vehicle by the end point of the section that is identified by the identifying unit 233 as the section between the output points of successive voice navigation in the travel route. For example, based on the route information, the map information, and the actual location information; the estimating unit 234 estimates the running distance from the actual location of the vehicle to the end point of the section identified by the identifying unit 233. Then, the estimating unit 234 divides the estimated running distance by the running velocity (for example, the average velocity) of the vehicle, and estimates the travel time from the actual location to the end point of the concerned section (hereinafter, also called a second-type travel time). Moreover, when the second-type travel time is estimated, the estimating unit 234 adds the second-type travel time to the current time, and estimates the expected time of passage by the end point of the concerned section.

The sending unit 235 sends, to the scheduling server 100 via the communication unit 210, information indicating a recommended time slot for dialogue as estimated by the estimating unit 234. More particularly, the sending unit 235 sends, as the information indicating a recommended time slot for dialogue, the information indicating a time slot in which voice navigation need not be output according to the estimation performed by the estimating unit 234. For example, the sending unit 235 sends, to the scheduling server 100, information indicating the running period for which the vehicle runs on the travel route, the information indicating a recommended time slot for dialogue during the running period, and the other schedule information of the driver.

The receiving unit 236 receives, from the scheduling server 100 via the communication unit 210, the information for requesting approval for a dialogue appointment and the schedule information indicating a recommended time slot for dialogue. More particularly, the receiving unit 236 receives, from the scheduling server 100, the information for requesting approval for a dialogue appointment and the second-type integrated schedule information.

The output control unit 237 performs control to display, in the display unit 270, the schedule information indicating a recommended time slot for dialogue as received by the receiving unit 236. More particularly, the output control unit 237 performs control to display, in the display unit 270, the second-type integrated schedule information that is received by the receiving unit 236. Moreover, the output control unit 237 performs control to display, in the display unit 270, the information for requesting approval for a dialogue appointment.

The receiving unit 238 receives, from the driver via the input unit 250, an input operation related to the approval of a dialogue appointment. When an input operation related to the approval of a dialogue appointment is received from the driver, the receiving unit 238 sends, to the scheduling server 100, the information indicating driver approval for the dialogue appointment.

Moreover, the receiving unit 236 receives, from the scheduling server 100 via the communication unit 210, the second-type integrated schedule information in which the dialogue appointment is reflected. The output control unit 237 performs control to display, in the display unit 270, the second-type integrated schedule information in which the dialogue appointment received by the receiving unit 236 is reflected.

The sensor unit 240 includes various sensors. For example, the sensor unit 240 includes a GNSS (Global Navigation Satellite System). A GNSS sensor uses the GNSS and receives radio waves that include positioning data transmitted from a navigation satellite. The positioning data is used in detecting the absolute location of the vehicle from the latitude information and the longitude information. Meanwhile, regarding the GNSS to be used, it is possible to use the GPS (Global Positioning System) or some other system. The sensor unit 240 outputs the positioning data, which is generated by the GNSS sensor, to the control unit 230.

The input unit 250 receives input of various operations from the driver. For example, the input unit 250 can receive various operations from the driver via a display screen (for example, the display unit 270) according to the touch-sensitive panel function. For example, the input unit 250 receives an input operation for inputting the information related to the point of departure and the destination. Moreover, the input unit 250 can receive various operations from buttons installed in the in-vehicle terminal device 200 or from a keyboard or a mouse connected to the in-vehicle terminal device 200.

Furthermore, the input unit 250 is equipped with the voice recognition function (for example, a microphone) and hence recognizes the voice of the driver. Thus, the input unit 250 can receive various operations from the driver by recognizing the voice of the driver.

The voice output unit 260 includes a speaker; converts digital voice signals, which are input from the control unit 230, into analog voice signals according to D/A (digital-to-analog) conversion; and outputs, from the speaker, the voice corresponding to the analog voice signals. More particularly, the voice output unit 260 outputs voice navigation according to the actual location of the vehicle. For example, under the control performed by the control unit 230, the voice output unit 260 outputs voice navigation, such as route guidance (such as guiding about right turns and left turns), traffic information (congestion/traffic restrictions/accident-prone locations in the surrounding area), and recommendations information (recommendations about surrounding facilities), according to the actual location of the vehicle.

The display unit 270 is, for example, a display screen implemented using a liquid crystal display or an organic EL (Electro-Luminescence) display, and represents a display device for displaying a variety of information. The display unit 270 displays a variety of information under the control performed by the control unit 230. For example, the display unit 270 is used to display the travel route and the map information proposed by the route guiding unit 231. Moreover, under the control performed by a output control unit 135, the display unit 270 is used to display the schedule information received by the receiving unit 236. Meanwhile, when a touch-sensitive panel is installed in the in-vehicle terminal device 200, the input unit 250 and the display unit 270 are integrated together. In the following explanation, the display unit 270 is sometimes referred to as the screen.

### [4. Configuration of terminal device]

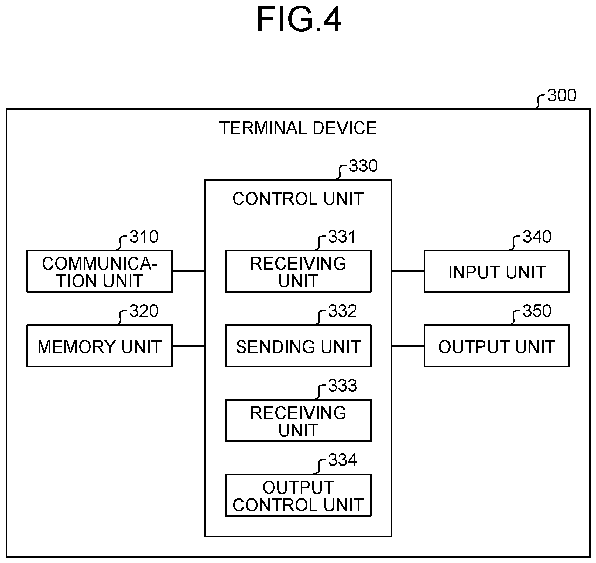

Explained below with reference to FIG. 4 is a configuration of the terminal device 300 according to the embodiment. FIG. 4 is a diagram illustrating an exemplary configuration of the terminal device 300 according to the embodiment. As illustrated in FIG. 4, the terminal device 300 includes a communication unit 310, a memory unit 320, a control unit 330, an input unit 340, and an output unit 350.

The communication unit 310 is implemented using, for example, an NIC. The communication unit 310 is a communication interface connected to the scheduling server 100 and the in-vehicle terminal device 200 in a wired manner or a wireless manner via the network N, and controls the communication of information with the scheduling server 100 and the in-vehicle terminal device 200.

The memory unit 320 is implemented, for example, using a semiconductor memory device such as a RAM or a flash memory, or using a memory device such as a hard disk or an optical disc. For example, the memory unit 320 is used to store the information (such as an information processing program and data) that is for use in the operations performed by the control unit 330.

The control unit 330 is a controller implemented when, for example, various programs (equivalent to an example of the information processing program) stored in the internal memory device of the terminal device 300 are implemented by a CPU, an MPU, an ASIC, or an FPGA using a memory area, such as the RAM, as the work area. In the example illustrated in FIG. 4, the control unit 330 includes a receiving unit 331, a sending unit 332, a receiving unit 333, and an output control unit 334.

The receiving unit 331 receives, via the input unit 340, an input operation performed by a dialogue seeker for requesting the display of the schedule information of the driver.

When the receiving unit 331 receives an input operation related to a request for displaying the schedule information of the driver, the sending unit 332 sends a request to the scheduling server 100 for sending the schedule information of the driver. More particularly, the sending unit 332 sends, to the scheduling server 100, a request for sending the driver identification information and the schedule information of the driver who is identified by the driver identification information.

The receiving unit 333 receives, from the scheduling server 100 via the communication unit 310, the schedule information indicating a recommended time slot for dialogue. More particularly, the receiving unit 333 receives the second-type integrated schedule information from the scheduling server 100.

The output control unit 334 performs control to display, in the output unit 350, the schedule information indicating a recommended time slot for dialogue as received by the receiving unit 333. More particularly, the output control unit 334 performs control to display, in the output unit 350, the second-type integrated schedule information received by the receiving unit 333. With reference to FIG. 5, under the control performed by the output control unit 334, the output unit 350 is used to display the second-type integrated schedule information SC1.

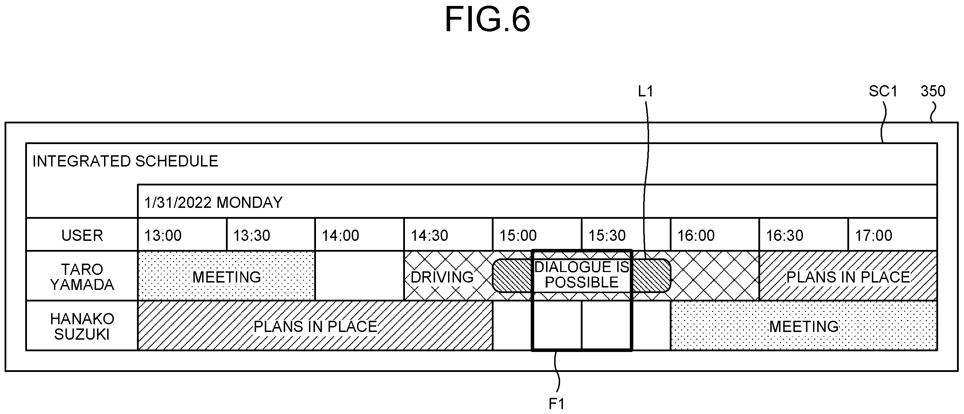

FIG. 6 is a diagram for explaining a reception operation for receiving a dialogue appointment according to the embodiment. In the example illustrated in FIG. 6, under the control performed by the output control unit 334, the output unit 350 superimposes the second-type integrated schedule information SCI on a frame F1 that allows selection of the desired time slot for taking a dialogue appointment with the driver. The width of the frame F1 is kept variable. Thus, by varying the width of the frame F1, the dialogue seeker can select a predetermined period of time such as 30 minutes or one hour. Moreover, the position of the frame F1 is also kept variable. Thus, the dialogue seeker can freely move the position of the frame F1 along the time axis of the second-type integrated schedule information SC1. The receiving unit 331 receives, from the dialogue seeker via the input unit 340, an input operation for moving the position of the frame F1 along the time axis of the second-type integrated schedule information SC1. Moreover, the receiving unit 331 can receive, from the dialogue seeker via the input unit 340, an input operation for varying the width of the frame F1. In this way, the receiving unit 331 receives input operations from the dialogue seeker in regard to the desired time slot for taking a dialogue appointment with the driver. Furthermore, the receiving unit 331 receives, from the dialogue seeker, an input operation for finalizing the desired time slot for taking a dialogue appointment with the driver. For example, as an input operation for finalizing the desired time slot for taking a dialogue appointment with the driver, the receiving unit 331 can receive, from the dialogue seeker, an input operation of tapping or clicking on some part of the frame F1. When an input operation for finalizing the desired time slot for taking a dialogue appointment with the driver is received from the dialogue seeker, the receiving unit 331 sends, to the scheduling server 100, request information related to the dialogue appointment with the driver.

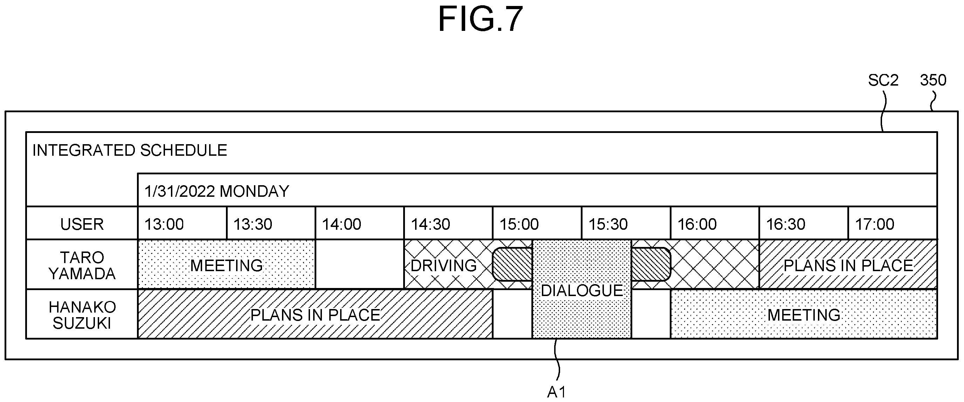

FIG. 7 is a diagram illustrating an example of the integrated schedule information in which a dialogue appointment is reflected according to the embodiment. The receiving unit 333 receives, from the scheduling server 100 via the communication unit 310, the second-type integrated schedule information in which the dialogue appointment is reflected. The output control unit 334 performs control to display, in the output unit 350, the second-type integrated schedule information in which the dialogue appointment is reflected and which is received by the receiving unit 333. Thus, under the control performed by the output control unit 334, the output unit 350 is used to display second-type integrated schedule information SC2 in which the dialogue appointment is reflected. With reference to FIG. 7, under the control performed by the output control unit 334, the output unit 350 is used to display a slot A1, which indicates the time slot corresponding to the dialogue appointment, in a superimposed manner on the second-type integrated schedule information SC2. The slot A1 is displayed in a superimposed manner on the first-type integrated schedule information of Taro Yamada, who is the driver, as well as on the schedule information of Hanako Suzuki, who is the dialogue seeker.

The input unit 340 receives various operations from the dialogue seeker. For example, the input unit 340 can receive various operations from the dialogue seeker via the display screen (for example, the output unit 350) according to the touch-sensitive panel function. Moreover, the input unit 340 can receive various operations from buttons installed in the terminal device 300 or from a keyboard or a mouse connected to the terminal device 300.

The output unit 350 is, for example, a display screen implemented using a liquid crystal display or an organic EL display, and represents a display device for displaying a variety of information. The output unit 350 displays a variety of information under the control performed by the control unit 330. For example, under the control performed by the output control unit 334, the output unit 350 displays the schedule information received by the receiving unit 333. Meanwhile, when a touch-sensitive panel is installed in the terminal device 300, the input unit 340 and the output unit 350 are integrated together. In the following explanation, the output unit 350 is sometimes referred to as the screen.

### [5. Flow of information processing]

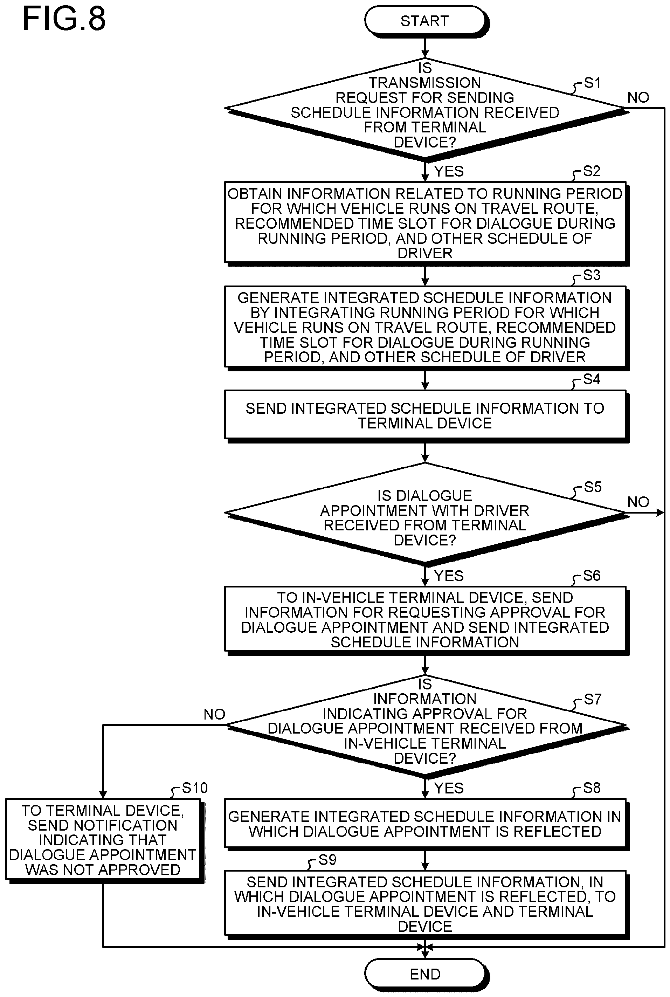

Explained below with reference to FIG. 8 is the flow of information processing performed in the scheduling server 100 according to the embodiment. FIG. 8 is a flowchart for explaining the flow of information processing performed in the scheduling server 100 according to the embodiment.

In the example illustrated in FIG. 8, in the scheduling server 100, the receiving unit 132 determines whether or not a transmission request for sending the schedule information is received from the terminal device 300 (Step S1). If the receiving unit 132 determines that a request for sending the schedule information is not received from the terminal device 300 (No at Step S1), then it marks the end of the operations. On the other hand, when the receiving unit 132 determines that a request for sending the schedule information is received from the terminal device 300 (Yes at Step S1), the generating unit 133 of the scheduling server 100 obtains the information related to the running period for which the vehicle runs on the travel route, a recommended time slot for dialogue during the running period, and the other schedule of the driver (Step S2). Subsequently, based on the obtained information, the generating unit 133 generates integrated schedule information by integrating the running period for which the vehicle runs on the travel route, the recommended time slot for dialogue during the running period, and the other schedule of the driver (Step S3). Then, the providing unit 134 of the scheduling server 100 sends the schedule information, which is generated by the generating unit 133, to the terminal device 300 (Step S4).

Moreover, the receiving unit 132 determines whether or not request information related to a dialogue appointment with the driver is received from the terminal device 300 (Step S5). If the receiving unit 132 determines that request information related to a dialogue appointment with the driver is not received from the terminal device 300 (No at Step S5), then it marks the end of the operations. On the other hand, when the receiving unit 132 determines that request information related to a dialogue appointment with the driver is received from the terminal device 300 (Yes at Step S5), the providing unit 134 sends, to the in-vehicle terminal device 200, the information for requesting approval for a dialogue appointment and the integrated schedule information (Step S6).

Furthermore, the receiving unit 132 determines whether or not information indicating approval of the dialogue appointment is received from the in-vehicle terminal device 200 (Step S7). If the receiving unit 132 determines that information indicating approval of the dialogue appointment is received from the in-vehicle terminal device 200 (Yes at Step S7), then the generating unit 133 generates integrated schedule information in which the dialogue appointment is reflected (Step S8). The providing unit 134 sends, to the terminal device 300 and the in-vehicle terminal device 200, the integrated schedule information in which the dialogue appointment is reflected and which is generated by the generating unit 133 (Step S9) .

On the other hand, if the receiving unit 132 determines that information indicating approval of the dialogue appointment is not received from the in-vehicle terminal device 200 (No at Step S7), then the providing unit 134 sends a notification to the terminal device 300 indicating that the dialogue appointment was not approved (Step S10).

### [6. Modification examples]

The operations according to the embodiment described above can be implemented in various other forms other than the embodiment described above.

### [6-1. Estimation of time slot in which vehicles are stuck]

In the embodiment described above, the identifying unit 233 identifies, as the section in which voice navigation need not be output, the section between the output points of successive voice navigation in the travel route. However, the section identified by the identifying unit 233 as the section in which voice navigation need not be output is not limited to the section explained above. More particularly, the identifying unit 233 identifies, as the section in which voice navigation need not be output, such a section in the travel route in which the vehicles are stuck. Generally, during the period of time for which the vehicle is running in a section in which vehicles are stuck, since there is not much change in the location of the vehicle, that period of time can be estimated to be the time slot in which voice navigation is not output (i.e., the time slot in which voice navigation need not be output).

### [6-1-1. Estimation of time slot of getting caught up in traffic congestion]

Generally, a section involving traffic congestion is believed to be the section in which the vehicles are stuck. Thus, as the section in which voice navigation need not be output, the identifying unit 233 identifies a traffic congestion section involving traffic congestion in the travel route. More particularly, the obtaining unit 232 obtains, for example, from a traffic information management server via the communication unit 210, traffic congestion information in the vicinity of the actual location of the concerned vehicle. Then, based on the route information, the map information, the actual location information, and the traffic congestion information as obtained by the obtaining unit 232; the identifying unit 233 identifies a traffic congestion section involving traffic congestion in the travel route to be followed next.

The estimating unit 234 estimates the expected time of arrival of the vehicle to the traffic congestion section that is identified by the identifying unit 233. For example, the estimating unit 234 estimates the expected time of arrival of the vehicle to the starting point of the traffic congestion section that is identified by the identified by the identifying unit 233. For example, the estimating unit 234 estimates the running distance from the actual location of the vehicle to the starting point of the traffic congestion section that is identified by the identifying unit 233. Then, the estimating unit 234 divides the estimated running distance by the running velocity (for example, the average velocity) of the vehicle, and estimates the travel time from the actual location to the starting point of the traffic congestion section (hereinafter, also called a third-type travel time). Moreover, when the third-type travel time is estimated, the estimating unit 234 adds the third-type travel time to the current time, and estimates the expected time of arrival to the starting point of the traffic congestion section.

Then, the estimating unit 234 estimates the expected time of passage of the vehicle through the traffic congestion section that is identified by the identifying unit 233. For example, the estimating unit 234 estimates the expected time of passage of the vehicle by the end point of the traffic congestion section that is identified by the identifying unit 233. For example, based on the traffic congestion information, the estimating unit 234 estimates the travel time required for the vehicle to travel through the traffic congestion section (hereinafter, also called a fourth-type travel time). Moreover, when the fourth-type travel time is estimated, the estimating unit 234 adds the fourth-type travel to the expected time of arrival of the vehicle to the end point of the traffic congestion section, and estimates the expected time of passage of the vehicle by the end point of the traffic congestion section. Then, the estimating unit 234 estimates that the time slot from the expected time of arrival to the expected time of passage represents the time slot in which voice navigation need not be output.

### [6-1-2. Estimation of time slot of passing through congested intersection]

Generally, a section having a congested intersection is believed to be the section in which the vehicles are stuck. The identifying unit 233 identifies a particular intersection in the travel route as the section in which voice navigation need not be output. More particularly, the obtaining unit 232 obtains, from a traffic information management server via the communication unit 210, statistical information related to the required transit time at each intersection having traffic lights (hereinafter, also called statistical information). For example, the obtaining unit 232 can obtain statistical information for each travelling direction of the vehicles as the statistical information related to the required transit time at each intersection having traffic lights. Then, based on the route information, the map information, the actual location information, and the statistical information obtained by the obtaining unit 232; the identifying unit 233 identifies, as a specific intersection from among the intersections present in the travel route to be followed next, an intersection at which the required time for passage exceeds a predetermined period of time.

The estimating unit 234 estimates the expected time of arrival of the vehicle to the specific intersection that is identified by the identifying unit 233. For example, the estimating unit 234 estimates the expected time of arrival of the vehicle to the specific intersection that is identified by the identifying unit 233. For example, based on the route information, the map information, and the actual location information; the estimating unit 234 estimates the running distance from the actual location of the vehicle to the specific intersection that is identified by the identifying unit 233. Then, the estimating unit 234 divides the estimated running distance by the running velocity (for example, the average velocity) of the vehicle, and estimates the travel time from the actual location to the specific intersection (hereinafter, also called a fifth-type travel time). Moreover, when the fifth-type travel time is estimated, the estimating unit 234 adds the fifth-type travel time to the current time, and estimates the expected time of arrival to the specific intersection.

Then, the estimating unit 234 estimates the expected time of passage of the vehicle through the specific intersection that is identified by the identifying unit 233. For example, based on the statistical information, the estimating unit 234 estimates the required transit time at the specific intersection that is identified by the identifying unit 233. For example, the estimating unit 234 obtains the statistical value of the required transit time at the specific intersection, which is identified by the identifying unit 233, as the required transit time for the vehicle to pass through the specific intersection. Moreover, when the required transit time is estimated, the estimating unit 234 adds the required transit time to the expected time of arrival at the specific intersection, and estimates the required time of passing of the vehicle through the specific intersection that is identified by the identifying unit 233. Then, the estimating unit 234 estimates that the time slot from the expected time of arrival to the expected time of passage represents the time slot in which voice navigation need not be output.

### [6-2. Estimation of time slot of running in self-driving section]

In the embodiment described above, the identifying unit 233 identifies, as the section in which voice navigation need not be output, the section between the output points of successive voice navigation in the travel route. However, the section identified by the identifying unit 233 as the section in which voice navigation need not be output is not limited to the section explained above. More particularly, the identifying unit 233 identifies, as the section in which voice navigation need not be output, a self-driving section in the travel route. Generally, when the vehicle is running in a self-driving section, since the driver is not driving the vehicle, it can be estimated that voice navigation such as route guidance and traffic information need not be output in that time slot.

The identifying unit 233 identifies a self-driving section in the travel route as the section in which voice navigation need not be output. More particularly, the obtaining unit 232 refers to the map information storing unit 221 and obtains map information indicating a self-driving section. Then, based on the route information, the map information, and the actual location information as obtained by the obtaining unit 232; the identifying unit 233 identifies a self-driving section in the travel route to be followed next.

The estimating unit 234 estimates the expected time of arrival of the vehicle to the self-driving section that is identified by the identifying unit 233. For example, the estimating unit 234 estimates the expected time of arrival of the vehicle to the starting point of the self-driving section that is identified by the identifying unit 233. For example, based on the route information, the map information, and the actual location information; the identifying unit 233 estimates the running distance from the actual location of the vehicle to the starting point of the self-driving section that is identified by the identifying unit 233. Then, the estimating unit 234 divides the estimated running distance by the running velocity (for example, the average velocity) of the vehicle, and estimates the travel time from the actual location to the starting point of the self-driving section (hereinafter, also called a sixth-type travel time). Moreover, when the sixth-type travel time is estimated, the estimating unit 234 adds the sixth-type travel time to the current time, and estimates the expected time of arrival to the starting point of the self-driving section.

Then, the estimating unit 234 estimates the expected time of passage of the vehicle through the self-driving section that is identified by the identifying unit 233. For example, the estimating unit 234 estimates the expected time of passage of the vehicle by the end point of the self-driving section that is identified by the identifying unit 233. For example, based on the route information, the map information, and the actual location information; the estimating unit 234 estimates the running distance from the actual location of the vehicle to the end point of the self-driving section that is identified by the identifying unit 233. Then, the estimating unit 234 divides the estimated running distance by the running velocity (for example, the average velocity) of the vehicle, and estimates the travel time from the actual location to the end point of the self-driving section (hereinafter, also called a seventh-type travel time). Moreover, when the seventh-type travel time is estimated, the estimating unit 234 adds the seventh-type travel time to the current time, and estimates the expected time of passage by the end point of the self-driving section. Then, the estimating unit 234 estimates that the time slot from the expected time of arrival to the expected time of passage represents the time slot in which voice navigation need not be output.

### [6-3. Estimation of time slot of running on familiar road]

Meanwhile, the identifying unit 233 can identify a familiar road to the driver of the vehicle as a known-road section in which voice navigation need not be output. More particularly, the identifying unit 233 identifies, as a known-road section in which voice navigation need not be output, a familiar road in the travel route on which the vehicle has run for a predetermined number of times or more in the past. Generally, when the vehicle is running on a familiar road, since the driver already knows the road, it can be estimated that voice navigation need not be output in that time slot.

The identifying unit 233 identifies a known-road section in the travel route as the section in which voice navigation need not be output. More particularly, the route guiding unit 231 of the in-vehicle terminal device 200 refers to the running history information stored in the running information storing unit 222, and controls the voice output unit 260 to not output voice navigation while the vehicle is running on a familiar road on which it has run for a predetermined number of times or more in the past. When the travel route to be followed next includes a road on which the vehicle has run for a predetermined number of times or more in the past, the identifying unit 233 identifies a known-road section corresponding to that familiar road.

The estimating unit 234 estimates the expected time of arrival of the vehicle to the known-road section that is identified by the identifying unit 233. For example, the estimating unit 234 estimates the expected time of arrival of the vehicle to the starting point of the known-road section that is identified by the identifying unit 233. For example, based on the route information, the map information, and the actual location information; the estimating unit 234 estimates the running distance from the actual location of the vehicle to the starting point of the known-road section that is identified by the identifying unit 233. Then, the estimating unit 234 divides the estimated running distance by the running velocity (for example, the average velocity) of the vehicle, and estimates the travel time from the actual location to the starting point of the known-road section (hereinafter, also called a eighth-type travel time). Moreover, when the eighth -type travel time is estimated, the estimating unit 234 adds the eighth -type travel time to the current time, and estimates the expected time of arrival to the starting point of the known-road section.

The estimating unit 234 estimates the expected time of passage of the vehicle through the known-road section that is identified by the identifying unit 233. For example, the estimating unit 234 estimates the expected time of passage of the vehicle by the end point of the known-road section that is identified by the identifying unit 233. For example, based on the route information, the map information, and the actual location information; the estimating unit 234 estimates the running distance from the actual location of the vehicle to the end point of the known-road section that is identified by the identifying unit 233. Then, the estimating unit 234 divides the estimated running distance by the running velocity (for example, the average velocity) of the vehicle, and estimates the travel time from the actual location to the end point of the known-road section (hereinafter, also called an ninth-type travel time). Moreover, when the ninth-type travel time is estimated, the estimating unit 234 adds the ninth-type travel time to the current time, and estimates the expected time of passage by the end point of the known-road section. Subsequently, the estimating unit 234 estimates that the time slot from the expected time of arrival to the expected time of passage represents the time slot in which voice navigation need not be output.

### [6-4. Miscellaneous]

In the embodiment and the modification examples described above, the estimating unit 234 can exclude, from the time slots in which voice navigation need not be output, the core time (mealtime) in which the recommendations information is output.

### [6-5. Estimation of time slot of low driving burden on driver of vehicle]

In the embodiment described above, of the running period for which the vehicle runs on the travel route, the estimating unit 234 estimates a time slot in which voice navigation need not be output as a recommended time slot for dialogue. However, the time slot estimated by the estimating unit 234 as the recommended time slot for dialogue is not limited to the time slot as explained above.

Generally, in a time slot in which the vehicle is running in a high-driving-burden section involving high driving burden on the driver of the vehicle, the driver needs to concentrate on the driving; and it is believed to be the time slot in which a dialogue with the driver is not recommended. On the other hand, of the running period for which the vehicle runs on the travel route, a time slot excluding the high-driving-burden time slot involves low driving burden on the driver of the vehicle and is believed to be the recommended time slot for dialogue in which a dialogue with the driver is recommended. In that regard, of the running period for which the vehicle runs on the travel route, the estimating unit 234 estimates a time slot involving low driving burden on the driver of the vehicle as a recommended time slot for dialogue.

Based on the route information and the map information, the identifying unit 233 identifies a high-driving-burden section involving high driving burden on the driver of the vehicle in the travel route. More particularly, the identifying unit 233 identifies the following types of sections as high-driving-burden sections: sections involving continuous right turns and left turns in the travel route; accident-prone sections; school zones; and sections involving a lot of bends. For example, based on the route information and the map information, the identifying unit 233 identifies a section involving continuous right turns and left turns in the travel route or a section involving a lot of bends. Moreover, the identifying unit 233 obtains, via the communication unit 210, accident-prone location map information from an external database used for managing the accident-prone location map information indicating the accident-prone locations displayed on a map. When the accident-prone location map information is obtained, the identifying unit 233 identifies an accident-prone section in the travel route based on the accident-prone location map information, the route information, and the map information. Moreover, the identifying unit 233 obtains, via the communication unit 210, road sign information from an external database used for managing the road sign information related to the installation positions of various road signs including the road signs indicating school zones. When the road sign information is obtained, the identifying unit 233 identifies the school zones in the travel route based on the road sign information, the route information, and the map information.

The estimating unit 234 estimates the expected time of arrival of the vehicle to the high-driving-burden section that is identified by the identifying unit 233. For example, the estimating unit 234 estimates the expected time of arrival of the vehicle to the starting point of the high-driving-burden section that is identified by the identifying unit 233. For example, based on the route information, the map information, and the actual location information; the estimating unit 234 estimates the running distance from the actual location of the vehicle to the starting point of the high-driving-burden section that is identified by the identifying unit 233. Then, the estimating unit 234 divides the estimated running distance by the running velocity (for example, the average velocity) of the vehicle, and estimates the travel time from the actual location to the starting point of the section (hereinafter, also called an tenth-type travel time). Moreover, when the tenth-type travel time is estimated, the estimating unit 234 adds the tenth-type travel time to the current time, and estimates the expected time of arrival to the starting point of the high-driving-burden section.

The estimating unit 234 estimates the expected time of passage of the vehicle through the high-driving-burden section that is identified by the identifying unit 233. For example, the estimating unit 234 estimates the expected time of passage of the vehicle by the end point of the high-driving-burden section that is identified by the identifying unit 233. For example, based on the route information, the map information, and the actual location information; the estimating unit 234 estimates the running distance from the actual location of the vehicle to the end point of the high-driving-burden section that is identified by the identifying unit 233. Then, the estimating unit 234 divides the estimated running distance by the running velocity (for example, the average velocity) of the vehicle, and estimates the travel time from the actual location to the end point of the high-driving-burden section (hereinafter, also called a eleventh-type travel time). Moreover, when the eleventh-type travel time is estimated, the estimating unit 234 adds the eleventh-type travel time to the current time, and estimates the expected time of passage by the end point of the high-driving-burden section.

Then, the estimating unit 234 estimates that the time slot from the expected time of arrival to the expected time of passage represents the high-driving-burden time slot in which there is high driving burden on the driver of the vehicle. Subsequently, in a time slot excluding the high-driving-burden time slot estimated from the running period for which the vehicle runs on the travel route, the estimating unit 234 estimates an uninterrupted period of time equal to or longer than a predetermined period of time as a recommended time slot for dialogue.

In the embodiment and the modification examples described above, regarding the section corresponding to the recommended time slot for dialogue, the estimating unit 234 can recalculate the time of arrival of the vehicle and the time of passage of the vehicle on a periodic basis. In that case, if the start time or the end time of the recommended time slot for dialogue as estimated by recalculation has changed by a predetermined period of time or more as compared to the recommended time slot for dialogue as estimated earlier, then the sending unit 235 can send the newly-estimated recommended time slot for dialogue to the scheduling server 100; and the scheduling server 100 can send, to the terminal device 300, information indicating a change in the recommended time slot for dialogue and the newly-estimated recommended time slot for dialogue, and can prompt the terminal device 300 to reset the dialogue appointment. As a result, according to a contingency situation, even if there is any change in the schedule of the vehicle running on the travel route, the information processing device can notify the dialogue seeker about the change in the schedule.

### [7. Effects]

As explained above, an information processing device (an example of the scheduling server 100 or the in-vehicle terminal device 200) according to the embodiment includes an obtaining unit (in the embodiment described above, the obtaining unit 232), an estimating unit (in the embodiment described above, the estimating unit 234), and a providing unit (in the embodiment described above, the providing unit 134). The obtaining unit obtains the route information indicating the travel route of the concerned vehicle up to the destination; obtains the map information corresponding to the travel route; and obtains the actual location information indicating the actual location of the vehicle. Based on the route information, the map information, and the actual location information; the estimating unit estimates a recommended time slot for dialogue, in which a dialogue with the driver of the vehicle is recommended, during the running period for which the vehicle runs on the travel route. The providing unit provides the schedule information, which indicates the recommended time slot for dialogue, to an external device (an example of the terminal device 300).

As a result, the information processing device becomes able to estimate, as the recommended time slot for dialogue, such a time slot during the running period, for which the vehicle runs on the travel route, in which it is suitable for the driver to talk while driving; and becomes able to provide the dialogue seeker with the schedule information indicating a suitable time slot for the driver to talk while driving. As a result, the information processing device can enable the dialogue seeker to take a dialogue appointment in the suitable time slot for the driver to talk while driving. Thus, the information processing device becomes able to ensure that the driver, who is driving, and the dialogue seeker can have a dialogue in a suitable time slot for the driver to talk while driving.

Moreover, as a recommended time slot for dialogue, the estimating unit estimates a time slot in which there is no need to output voice navigation, which is output according to the actual location of the vehicle.

As a result, the information processing device can estimate, as the recommended time slot for dialogue, a time slot in which voice navigation need not be output during the running period for which the vehicle runs on the travel route; and can provide the dialogue seeker with the schedule information indicating the time slot in which voice navigation need not be output. As a result, the information processing device can enable the dialogue seeker to take a dialogue appointment with the driver in a time slot in which voice navigation need not be output. Thus, the information processing device becomes able to ensure that the driver, who is driving, and the dialogue seeker can have a dialogue in a time slot in which voice navigation need not be output.

Moreover, the information processing device further includes an identifying unit (in the embodiment described above, the identifying unit 233). Based on the route information and the map information, the identifying unit identifies such a section in the travel route in which voice navigation need not be output. The estimating unit estimates the expected time of arrival of the vehicle to the section in which voice navigation need not be output, estimates the expected time of passage of the vehicle through the section in which voice navigation need not be output, and estimates that the time slot from the expected time of arrival to the expected time of passage represents the time slot in which voice navigation need not be output.

As a result of identifying such a section in the travel route in which voice navigation need not be output, the information processing device becomes able to appropriately estimate, as the time slot in which voice navigation need not be output, a time slot in which the vehicle runs in a section not requiring the output of voice navigation. As a result, the information processing device becomes able to appropriately estimate, as the recommended time slot for dialogue, the time slot in which voice navigation need not be output.

Moreover, the identifying unit identifies, as a section in which voice navigation need not be output, the section between the output points of successive voice navigation in the travel route. The estimating unit estimates the expected time of arrival of the vehicle to the section between the output points of successive voice navigation in the travel route, estimates the expected time of passage of the vehicle through the section between the output points of successive voice navigation in the travel route, and estimates that the time slot from the expected time of arrival to the expected time of passage represents the time slot in which voice navigation need not be output.

Thus, by identifying a section between the output points of successive voice navigation in the travel route as a section in the travel route in which voice navigation need not be output, the information processing device can appropriately estimate the time slot in which the vehicle runs in the section between the output points of successive voice navigation as the time slot in which voice navigation need not be output.

Moreover, the identifying unit identifies a traffic congestion section involving traffic congestion in the travel route as a section in which voice navigation need not be output. The estimating unit estimates the expected time of arrival of the vehicle to the traffic congestion section, estimates the expected time of passage of the vehicle through the traffic congestion section, and estimates that the time slot from the expected time of arrival to the expected time of passage represents the time slot in which voice navigation need not be output.

Thus, by identifying a traffic congestion section involving traffic congestion in the travel route as a section in the travel route in which voice navigation need not be output, the information processing device can appropriately estimate the time slot in which the vehicle runs in the traffic congestion section as the time slot in which voice navigation need not be output.

Furthermore, the identifying unit identifies a specific intersection in the travel route as a section in which voice navigation need not be output. The estimating unit estimates the expected time of arrival of the vehicle to the specific intersection; estimates, based on the expected time of arrival and the statistical value of the required transit time at the specific intersection, the expected time of passage of the vehicle through the specific intersection; and estimates that the time slot from the expected time of arrival to the expected time of passage represents the time slot in which voice navigation need not be output.

Thus, by identifying a specific intersection in the travel route as a section in the travel route in which voice navigation need not be output, the information processing device can appropriately estimate the time slot in which the vehicle passes through the specific intersection as the time slot in which voice navigation need not be output.

Moreover, the identifying unit identifies a self-driving section in the travel route as a section in which voice navigation need not be output. The estimating unit estimates the expected time of arrival of the vehicle to the self-driving section, estimates the expected time of passage of the vehicle through the self-driving section, and estimates that the time slot from the expected time of arrival to the expected time of passage represents the time slot in which voice navigation need not be output.

Thus, by identifying a self-driving section in the travel route as a section in which voice navigation need not be output, the information processing device can appropriately estimate the time slot in which the vehicle runs in the self-driving section as the time slot in which voice navigation need not be output.

Furthermore, the identifying unit identifies a known-road section, in which the vehicle has run for a predetermined number of times or more in the past, as a section in which voice navigation need not be output. The estimating unit estimates the expected time of arrival of the vehicle to the known-road section, estimates the expected time of passage of the vehicle through the known-road section, and estimates that the time slot from the expected time of arrival to the expected time of passage represents the time slot in which voice navigation need not be output.

Thus, by identifying a known-road section in the travel route as a section in which voice navigation need not be output, the information processing device can appropriately estimate the time slot in which the vehicle runs in the known-road section as the time slot in which voice navigation need not be output.

Moreover, the estimating unit estimates, of the running period for which the vehicle runs on the travel route, a high-driving-burden time slot in which there is high driving burden on the driver of the vehicle; and estimates, in a time slot excluding the high-driving-burden time slot estimated from the running period for which the vehicle runs on the travel route, an uninterrupted period of time equal to or longer than a predetermined period of time as a recommended time slot for dialogue.

As a result, the information processing device can estimate, of the running period for which the vehicle runs on the travel route, a time slot in which there is low driving burden on the driver of the vehicle as a recommended time slot for dialogue, and can provide the dialogue seeker with the schedule information indicating the time slot in which there is low driving burden on the driver of the vehicle. As a result, the information processing device can enable the dialogue seeker to take a dialogue appointment in the time slot in which there is low driving burden on the driver of the vehicle. Thus, the information processing device becomes able to ensure that the driver, who is driving, and the dialogue seeker can have a dialogue in the time slot in which there is low driving burden on the driver of the vehicle.

Meanwhile, the information processing device further includes an identifying unit (in the embodiment described above, the identifying unit 233). Based on the route information and the map information, the identifying unit identifies a high-driving-burden section involving high driving burden on the driver of the vehicle in the travel route. The estimating unit estimates the expected time of arrival of the vehicle to the high-driving-burden section, estimates the expected time of passage of the vehicle through the high-driving-burden section, and estimates that the time slot from the expected time of arrival to the expected time of passage represents the high-driving-burden time slot.

Thus, by identifying a high-driving-burden section involving high driving burden on the driver of the vehicle in the travel route, the information processing device can appropriately estimate the time slot in which the vehicle runs in the high-driving-burden section as the high-driving-burden time slot. As a result, of the running period for which the vehicle runs on the travel route, the information processing device can appropriately estimate, as the time slot in which there is low driving burden on the driver of the vehicle, a time slot excluding the high-driving-burden time slot and including an uninterrupted period of time equal to or longer than a predetermined period of time. As a result, the information processing device can appropriately estimate, as the recommended time slot for dialogue, the time slot in which there is low driving burden on the driver of the vehicle.

The identifying unit identifies the following types of sections as high-driving-burden sections: sections involving continuous right turns and left turns in the travel route; accident-prone sections; school zones; and sections involving a lot of bends.

Thus, by identifying sections involving continuous right turns and left turns in the travel route, accident-prone sections, school zones, and sections involving a lot of bends in the travel route as the high-driving-burden sections; the information processing device can appropriately estimate, as a high-driving-burden time slot, a time slot in which the vehicle runs in a section involving continuous right turns and left turns in the travel route, or an accident-prone section, or a school zone, or a section involving a lot of bends in the travel route.

Moreover, the information processing device further includes a generating unit (in the embodiment described above, the generating unit 133). The generating unit generates integrated schedule information by integrating the running period for which the vehicle runs on the travel route, the recommended time slot for dialogue, and the other schedule of the driver.

As a result, the information processing device becomes able to provide the dialogue seeker with the schedule information of the driver for a whole day including the time slots suitable for the driver to talk while driving. Hence, the information processing device can enable the dialogue seeker to understand the overall schedule of the driver for the whole day and accordingly take a dialogue appointment in a suitable time slot for the driver to talk while driving.

Moreover, the providing unit sends the integrated schedule information to the external device of a third person; receives a dialogue appointment with the driver from the external device; and, if the driver approves the received dialogue appointment, provides the external device with the integrated schedule information in which the dialogue appointment is reflected.

Thus, the information processing device can notify the dialogue seeker about the fact that the driver has approved the dialogue appointment. Moreover, the information processing device can provide the dialogue seeker with the integrated schedule information in which the dialogue appointment is reflected. Hence, the information processing device can enhance the usability at the time when the dialogue seeker performs a dialogue appointment in a time slot that is suitable for the driver to talk while driving.

### [8. Hardware configuration]

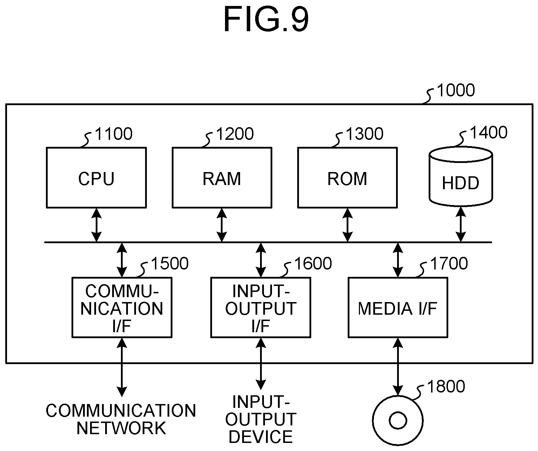

Meanwhile, an information processing device such as the scheduling server 100, the in-vehicle terminal device 200, or the terminal device 300 according to the embodiment and the modification example described above is implemented using, for example, a computer 1000 having a configuration illustrated in FIG. 9. FIG. 9 is a hardware configuration diagram illustrating an exemplary computer for implementing the functions of the scheduling server 100, the in-vehicle terminal device 200, or the terminal device 300. The following explanation is given with reference to the scheduling server 100 according to the embodiment. The computer 1000 includes a CPU 1100, a RAM 1200, a ROM 1300, an HDD 1400, a communication interface (I/F) 1500, an input-output interface (I/F) 1600, and a media interface (I/F) 1700.

The CPU 1100 performs operations according to the programs stored in the ROM 1300 or the HDD 1400, and controls the other constituent elements. The ROM 1300 is used to store a boot program that is executed by the CPU 1100 at the time of booting of the computer 1000, and to store the programs that are dependent on the hardware of the computer 1000.

The HDD 1400 is used to store the programs to be executed by the CPU 1100, and to store the data used in the programs. The communication interface 1500 receives the data from the other devices via a predetermined communication network and sends that data to the CPU 1100; and sends the data generated by the CPU 1100 to the other devices via a predetermined communication network.

The CPU 1100 controls an output device, such as a display, and an input device, such as a keyboard, via the input-output interface 1600. The CPU 1100 obtains data from the input device via the input-output interface 1600. Moreover, the CPU 1100 outputs the generated data to an output device via the input-output interface 1600. Meanwhile, instead of using the CPU 1100, it is also possible to use an MPU (Micro Processing Unit) or to use a GPU (Graphics Processing Unit) that requires enormous computational power.

The media interface 1700 reads programs or data stored in a recording medium 1800, and provides them to the CPU 1100 via the RAM 1200. The CPU 1100 loads those programs from the recording medium 1800 into the RAM 1200 via the media interface 1700, and executes the loaded programs. The recording medium 1800 is, for example, an optical recording medium such as a DVD (Digital Versatile Disc) or a PD (Phase change rewritable Disk); a magneto-optical recording medium such as an MO (Magneto-Optical disk); a tape medium; a magnetic recording medium; or a semiconductor memory.

For example, when the computer 1000 functions as the scheduling server 100, the CPU 1100 of the computer 1000 executes the programs loaded into the RAM 1200 and implements the functions of the control unit 130. Herein, the CPU 1100 reads those programs from the recording medium 1800 and executes them. However, as another example, the programs can be obtained from another device via a predetermined communication network.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

### [9. Miscellaneous]

Of the processes described above in the embodiment and the modification examples, all or part of the processes explained as being performed automatically can be performed manually. Similarly, all or part of the processes explained as being performed manually can be performed automatically by a known method. Moreover, the processing procedures, specific names, various data, and information including parameters described in the embodiments or illustrated in the drawings can be changed as required unless otherwise specified. For example, the variety of information illustrated in the drawings is not limited to the illustrated information.

The constituent elements of the device illustrated in the drawings are merely conceptual, and need not be physically configured as illustrated. The constituent elements, as a whole or in part, can be separated or integrated either functionally or physically based on various types of loads or use conditions.

Meanwhile, the embodiment and the modification examples described above can be appropriately combined without causing any contradictions in the operation details.

### Reference Signs List

- 1: information processing system
- 100: scheduling server
- 110: communication unit
- 120: memory unit
- 121: schedule information storing unit
- 130: control unit
- 131: obtaining unit
- 132: receiving unit
- 133: generating unit
- 134: providing unit
- 200: in-vehicle terminal device
- 210: communication device
- 220: memory unit
- 221: map information storing unit
- 222: running information storing unit
- 230: control unit
- 231: route guiding unit
- 232: obtaining unit
- 233: identifying unit
- 234: estimating unit
- 235: sending unit
- 236: receiving unit
- 237: output control unit
- 238: receiving unit
- 240: sensor unit
- 250: input unit
- 260: voice output unit
- 270: display unit
- 300: terminal device
- 310: communication unit
- 320: memory unit
- 330: control unit
- 331: receiving unit
- 332: sending unit
- 333: receiving unit
- 334: output control unit
- 340: input unit
- 350: output unit

## Claims

1. An information processing device comprising:
an obtaining unit that obtains
route information indicating travel route of a vehicle up to destination,
map information corresponding to the travel route, and
actual location information indicating actual location of the vehicle;
an estimating unit that, based on the route information, the map information, and the actual location information, estimates a recommended time slot for dialogue, in which it is recommended to have a dialogue with driver of the vehicle, during a running period for which the vehicle runs on the travel route; and
a providing unit that provides an external device with scheduling information indicating the recommended time slot for dialogue.

2. The information processing device according to claim 1, wherein the estimating unit estimates, as the recommended time slot for dialogue, a time slot in which voice navigation, which is output according to actual location of the vehicle, need not be output.

3. The information processing device according to claim 2, further comprising an identifying unit that, based on the route information and the map information, identifies a section, in the travel route, in which the voice navigation need not be output, wherein
the estimating unit
estimates expected time of arrival of the vehicle to a section in which the voice navigation need not be output,
estimates expected time of passage of the vehicle through the section in which the voice navigation need not be output, and
estimates that a time slot from the expected time of arrival to the expected time of passage represents a time slot in which the voice navigation need not be output.

4. The information processing device according to claim 3, wherein
the identifying unit identifies, as a section in which the voice navigation need not be output, a section between output points of successive voice navigation in the travel route, and
the estimating unit
estimates the expected time of arrival of the vehicle to the section between output points of the successive voice navigation in the travel route,
estimates the expected time of passage of the vehicle through the section between output points of the successive voice navigation in the travel route, and
estimates that a time slot from the expected time of arrival to the expected time of passage represents a time slot in which the voice navigation need not be output.

5. The information processing device according to claim 3, wherein
the identifying unit identifies, as a section in which the voice navigation need not be output, a traffic congestion section involving traffic congestion in the travel route, and
the estimating unit
estimates the expected time of arrival of the vehicle to the traffic congestion section,
estimates the expected time of passage of the vehicle through the traffic congestion section, and
estimates that a time slot from the expected time of arrival to the expected time of passage represents a time slot in which the voice navigation need not be output.

6. The information processing device according to claim 3, wherein
the identifying unit identifies, as a section in which the voice navigation need not be output, a specific intersection in the travel route, and
the estimating unit
estimates the expected time of arrival of the vehicle to the specific intersection,
based on the expected time of arrival and based on statistical value of required transit time at the specific intersection, estimates the expected time of passage of the vehicle through the specific intersection, and
estimates that a time slot from the expected time of arrival to the expected time of passage represents a time slot in which the voice navigation need not be output.

7. The information processing device according to claim 3, wherein
the identifying unit identifies, as a section in which the voice navigation need not be output, a self-driving section in the travel route, and
the estimating unit
estimates the expected time of arrival of the vehicle to the self-driving section,
estimates the expected time of passage of the vehicle through the self-driving section, and
estimates that a time slot from the expected time of arrival to the expected time of passage represents a time slot in which the voice navigation need not be output.

8. The information processing device according to claim 3, wherein
the identifying unit identifies, as a section in which the voice navigation need not be output, a known-road section in the travel route on which the vehicle has run for a predetermined number of times or more in past, and
the estimating unit
estimates the expected time of arrival of the vehicle to the known-road section,
estimates the expected time of passage of the vehicle through the known-road section, and
estimates that a time slot from the expected time of arrival to the expected time of passage represents a time slot in which the voice navigation need not be output.

9. The information processing device according to claim 1, wherein the estimating unit
estimates a high-driving-burden time slot in which, during the running period for which the vehicle runs on the travel route, there is high driving burden on driver of the vehicle, and
in a time slot excluding a high-driving-burden time slot that is estimated from the running period for which the vehicle runs on the travel route, estimates an uninterrupted period of time equal to or longer than a predetermined period of time as the recommended time slot for dialogue.

10. The information processing device according to claim 9, further comprising an identifying unit that, based on the route information, the map information, and the actual location information, identifies, in the travel route, a high-driving-burden section in which there is high driving burden on driver of the vehicle, wherein
the estimating unit
estimates the expected time of arrival of the vehicle to the high-driving-burden section,
estimates the expected time of passage of the vehicle through the high-driving-burden section, and
estimates that a time slot from the expected time of arrival to the expected time of passage represents the high-driving-burden time slot.

11. The information processing device according to claim 10, wherein, as the high-driving-burden section, the identifying unit identifies a section involving continuous right turns and left turns in the travel route, or an accident-prone section, or a school zone, or a section involving a lot of bends.

12. The information processing device according to claim 1, further comprising a generating unit that generates integrated schedule information by integrating
the running period for which the vehicle runs on the travel route,
the recommended time slot for dialogue during the running period, and
other schedule of the driver.

13. The information processing device according to claim 12, wherein the providing unit
sends the integrated schedule information to external device of a third person,
receives, from the external device, a dialogue appointment with the driver, and
when the driver approves the received dialogue appointment, provides the external device with the integrated schedule information in which the dialogue appointment is reflected.

14. An information processing method implemented in an information processing device, comprising:
an obtaining step that includes obtaining
route information indicating travel route of a vehicle up to destination,
map information corresponding to the travel route, and
actual location information indicating actual location of the vehicle;
an estimating step that, based on the route information, the map information, and the actual location information, includes estimating a recommended time slot for dialogue, in which it is recommended to have a dialogue with driver of the vehicle, during a running period for which the vehicle runs on the travel route; and
a providing step that includes providing an external device with scheduling information indicating the recommended time slot for dialogue.

15. An information processing program that causes an information processing device to execute:
an obtaining step that includes obtaining route information indicating travel route of a vehicle up to destination,
map information corresponding to the travel route, and
actual location information indicating actual location of the vehicle;
an estimating step that, based on the route information, the map information, and the actual location information, includes estimating a recommended time slot for dialogue, in which it is recommended to have a dialogue with driver of the vehicle, during a running period for which the vehicle runs on the travel route; and
a providing step that includes providing an external device with scheduling information indicating the recommended time slot for dialogue.
